# FASCICULE DE BREVET EUROPEEN

(11) **EP 1 026 024 B1**
(45) Date de publication et mention de la délivrance du brevet: **30.07.2003**
(21) Numéro de dépôt: 00400238.2
(22) Date de dépôt: 31.01.2000
(51) Int. Cl.: B60K 17/356

(54) **Dispositif de transmission d'un engin mobile ayant au moins deux ponts moteurs**
Kraftübertragung für ein fahrbares Gerät mit mindestens zwei angetriebenen Achsen
Transmission for a mobile machine with at least two drive axles

(30) Priorité: 05.02.1999 FR 9901359
(43) Date de publication de la demande: 09.08.2000
(73) Titulaire: POCLAIN HYDRAULICS INDUSTRIE, 60411 Verberie (FR)
(72) Inventeur: Martin, Louis, 60200 Compiegne (FR); Cousin, Jean-Claude, 60700 Pontpoint (FR)
(74) Mandataire: Intès, Didier Gérard André

(56) Documents cités:
- EP-A- 0 547 947
- EP-A- 0 627 335
- WO-A-89/12558
- WO-A-96/33883
- FR-A- 2 719 001
- GB-A- 1 554 443
- US-A- 3 161 246

## Description

La présente invention concerne un dispositif de transmission d'un engin mobile comprenant un premier et un deuxième pont moteur, chaque pont moteur ayant deux moteurs hydrauliques, un pour chaque côté de l'engin, le dispositif comprenant deux circuits fermés de transmission analogues, un pour chaque côté de l'engin, chaque circuit fermé ayant une pompe hydraulique ainsi qu'un moteur du premier pont et un moteur du deuxième pont.

Un dispositif de ce type est connu par le document EP 0 627 335 qui montre un véhicule à transmission hydrostatique ayant plusieurs ponts, deux pompes alimentant respectivement les moteurs qui entraînent les roues de chacun des deux côtés du véhicule. Ce dispositif présente l'avantage de régler les cylindrées respectives des deux pompes de manière identique pour une circulation en ligne droite, ou de manière différente lorsque, par exemple pour effectuer un virage serré, il est nécessaire que les moteurs entraînant les roues d'un côté du véhicule fournissent un couple supérieur à celui que fournissent les moteurs qui entraînent les roues de l'autre côté.

Ainsi, le dispositif divulgué par le document EP 0 627 335 permet d'obtenir un comportement différent entre les roues d'un côté du véhicule et les roues de l'autre côté. Toutefois, il ne permet pas de gérer les différences de comportement entre les roues situées d'un même côté du véhicule.

On connaît par ailleurs, par le document EP 0 547 947, un véhicule à transmission hydrostatique comprenant des moteurs doubles à trois orifices. Tous les moteurs sont alimentés par une même pompe et l'on peut éviter des différences de comportement indésirables, par exemple un patinage, entre les roues des différents ponts. Ainsi, il est possible de réaliser un effet de blocage différentiel entre le pont avant et le pont arrière, mais pas de gérer différemment l'alimentation des moteurs entraînant les roues de l'un ou de l'autre côté du véhicule.

Les dispositifs connus évoqués ci-dessus présentent donc certains avantages qui ont toutefois comme contre-partie des inconvénients plus ou moins gênants selon les conditions d'utilisation du véhicule.

La présente invention a pour but de proposer un dispositif dans lequel se retrouvent les avantages des dispositifs connus évoqués précédemment, mais qui soit exempt ou sensiblement exempt de leurs inconvénients.

Ce but est atteint grâce au fait que les moteurs hydrauliques du deuxième pont sont des moteurs doubles qui comprennent chacun deux moteurs élémentaires, chaque moteur élémentaire ayant un premier et un deuxième raccord élémentaire, d'alimentation ou d'échappement, les premiers raccords élémentaires étant mis en commun pour former un premier raccord principal du moteur double, tandis que les deuxièmes raccords élémentaires sont séparés et forment respectivement des deuxième et troisième raccords principaux du moteur double, les moteurs hydrauliques du premier pont ayant chacun au moins un premier et un deuxième raccord principal, d'alimentation ou d'échappement, au fait que, dans chaque circuit fermé, le premier raccord principal du moteur double et le premier raccord principal du moteur du premier pont sont respectivement raccordés en permanence à chacun des deux orifices de la pompe du circuit considéré et au fait que chaque circuit fermé comprend, en outre, un sélecteur à au moins deux positions, disposé sur des conduites de raccordement entre la pompe, les deuxième et troisième raccords principaux du moteur double et le deuxième raccord principal du moteur du premier pont.

L'invention réalise ainsi un raccordement original des moteurs de chacun des deux circuits fermés du dispositif qui comprennent des moteurs doubles et prévoit, pour chaque circuit fermé, de placer précisément le sélecteur sur des conduites de raccordement entre la pompe, les deuxième et troisième raccords principaux du moteur double et le deuxième raccord principal du moteur du premier pont. Selon la configuration des sélecteurs. on pourra par exemple, pour chaque circuit fermé, réaliser un raccordement en série de l'un des moteurs élémentaires du deuxième pont avec le moteur du premier pont, tandis que l'autre moteur élémentaire du deuxième pont pourra être alimenté en parallèle ou inactivé.

Quoiqu'il en soit, dans la mesure où le premier raccord principal du moteur double et le premier raccord principal du moteur du premier pont sont respectivement raccordés en permanence à chacun des deux orifices de la pompe du circuit fermé considéré, on fait en sorte que l'un de ces deux moteurs soit toujours alimenté avant l'autre, sachant que l'on pourra toutefois choisir le sélecteur de telle sorte que, dans l'une de ses positions, il permette d'inactiver totalement les moteurs élémentaires du moteur double, pour une circulation du véhicule a grande vitesse avec un entraînement réalisé seulement par le moteur du premier pont.

Ainsi, avantageusement, pour chaque circuit fermé, le sélecteur présente une position d'inactivation du deuxième pont dans laquelle il met en communication les deuxième et troisième raccords principaux du moteur double et les fait communiquer avec l'orifice de la pompe auquel est raccordé le premier raccord principal dudit moteur double.

Avantageusement, pour chaque circuit fermé, le sélecteur présente une position de partage de débit dans laquelle le deuxième raccord du moteur double est raccordé à l'orifice de la pompe auquel est relié le premier raccord principal du moteur du premier pont, en parallèle avec ce dernier.

Ainsi, l'un des moteurs élémentaires du moteur double est alimenté en parallèle avec le moteur du premier pont, de sorte que le débit se trouve partagé entre ce moteur élémentaire qui appartient au deuxième pont et le moteur du premier pont.

Dans cette position, on peut par exemple choisir de raccorder le troisième raccord principal du moteur double au deuxième raccord principal du moteur du premier pont. Il s'agit alors d'une position de partage de débit et de blocage de différentiel puisque le deuxième moteur élémentaire du moteur double est disposé en série par rapport au moteur du premier pont, tandis que le premier moteur élémentaire est disposé en parallèle par rapport à ce moteur du premier pont.

On peut en outre choisir que pour chaque circuit fermé, le sélecteur présente une position de couple maximal dans laquelle les deuxième et troisième raccords principaux du moteur double et le premier raccord principal du moteur du premier pont sont raccordés en parallèle au même orifice de la pompe, tandis que le premier raccord principal du moteur double et le deuxième raccord principal du moteur du premier pont sont raccordés en parallèle à l'autre orifice de la pompe.

Dans ce cas, pour chaque circuit fermé, tous les moteurs sont alimentés en parallèle, de sorte que la cylindrée totale alimentée par la pompe est égale à la somme de la cylindrée du moteur du premier pont et de la cylindrée du moteur double du deuxième pont. L'engin peut alors développer un couple maximal, ce qui est particulièrement approprié pour son utilisation en condition de travail, sur un chantier ou un terrain difficile. Cette position correspond donc à un partage de débit et à l'obtention d'un couple maximal.

Il est également avantageux que, pour chaque circuit fermé, le sélecteur comporte une position de report du débit sur le deuxième pont dans laquelle le premier raccord principal du moteur du premier pont est raccordé à un orifice de la pompe, tandis que le deuxième raccord principal du moteur double communique avec l'orifice de la pompe auquel est raccordé le premier raccord principal de ce moteur double et que le troisième raccord principal du moteur double est raccordé au deuxième raccord principal du moteur du premier pont. Dans ce cas, le premier moteur élémentaire du moteur double est inactivé et le débit du moteur du premier pont se reporte sur le deuxième moteur élémentaire, de sorte que ces deux moteurs tournent à la même vitesse ce qui revient à obtenir un blocage de différentiel entre des roues des deux ponts, pour chaque côté du véhicule. Ce blocage de différentiel est obtenu alors que la cylindrée alimentée est seulement celle du deuxième moteur élémentaire, de sorte que la vitesse de l'engin peut être relativement importante.

Le dispositif comporte avantageusement des moyens pour commander simultanément les sélecteurs des deux circuits fermés.

Ces moyens permettent d'obtenir, pour chaque côté de l'engin, la même motricité quelle que soit la position des deux sélecteurs. Ceci est nécessaire pour la conduite sur route et également pour la circulation en ligne droite et sans dérapage sur un terrain de travail tel qu'un chantier.

Avantageusement, le dispositif comporte des moyens pour, en virage. faire cesser la commande simultanée des sélecteurs des deux circuits fermés et commander lesdits sélecteurs de telle sorte que la cylindrée totale raccordée à un orifice de la pompe du circuit fermé situé du côté du véhicule interne au virage soit supérieure à la cylindrée raccordée à l'orifice correspondant de la pompe du circuit fermé situé du côté du véhicule externe au virage.

Le fait de faire cesser la commande simultanée des sélecteurs permet d'obtenir des conditions de motricité différentes entre l'un et l'autre côté du véhicule, par exemple en choisissant à dessein de faire déraper les roues d'un côté du véhicule par rapport aux roues de l'autre côté. Ceci permet de faire virer le véhicule avec un rayon de braquage très faible.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre schématiquement un dispositif conforme à l'invention montrant une position des sélecteurs des deux circuits fermés, et
- les figures 2 à 4 montrent des dispositifs conformes à l'invention dans différentes positions des sélecteurs.

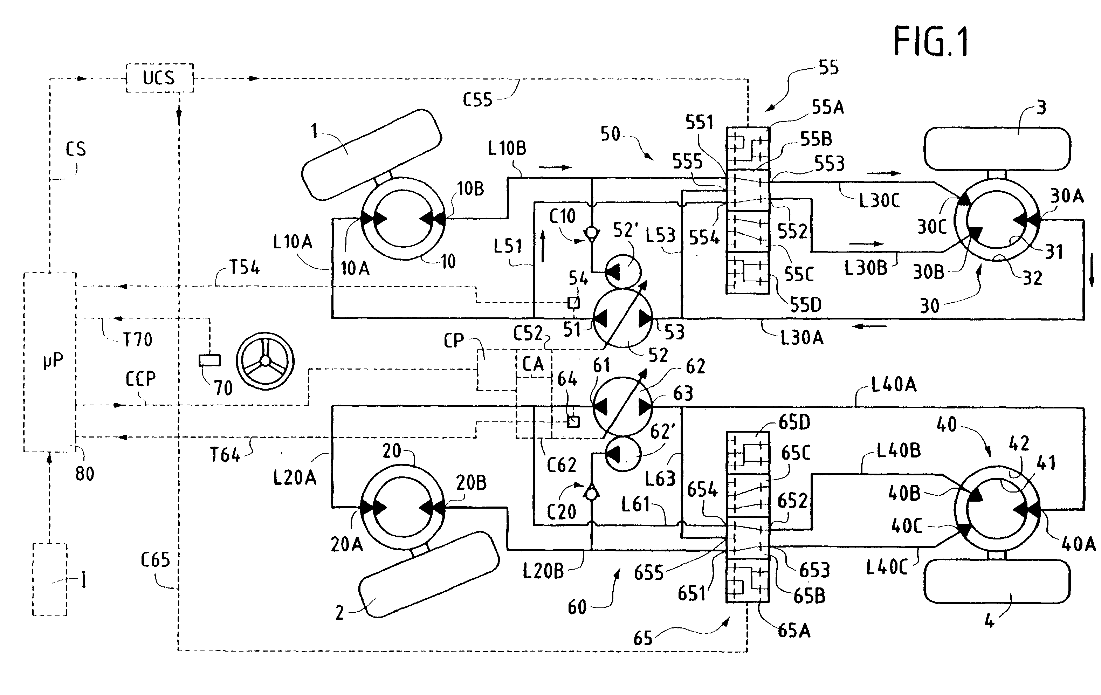

Le dispositif représenté sur la figure 1 sert à la transmission d'un engin mobile à quatre roues motrices, respectivement 1, 2, 3 et 4, les roues 1 et 2 étant directionnelles. Par exemple, pour un engin agricole tel qu'une moissonneuse batteuse, ces roues directionnelles sont les roues arrières et pour un tracteur agricole, ces roues directionnelles sont les roues avant.

L'engin comporte deux ponts moteurs, le premier pont moteur comprenant les deux moteurs hydrauliques 10 et 20 servant respectivement à l'entraînement des roues 1 et 2, tandis que le deuxième pont moteur comporte les deux moteurs hydrauliques 30 et 40 qui servent respectivement à l'entraînement des roues 3 et 4. Ainsi, les moteurs 10 et 30 servent à l'entraînement des roues d'un premier côté du véhicule et appartiennent à un premier circuit fermé 50, tandis que les moteurs 20 et 40 servent à l'entraînement des roues de l'autre côté du véhicule et appartiennent à un deuxième circuit fermé 60. Ces circuits fermés 50 et 60 comportent chacun une pompe hydraulique à cylindrée variable, respectivement 52 et 62.

Les moteurs hydrauliques 30 et 40 du deuxième pont sont des moteurs doubles, dit à trois orifices. Ainsi, ils comprennent chacun un premier et un deuxième moteur élémentaire, respectivement 31 et 32 pour le moteur 30, et 41 et 42 pour le moteur 40. Les moteurs élémentaires 31 et 32 comprennent chacun un premier raccord élémentaire, qui sert à leur alimentation ou à leur échappement selon le sens de circulation du fluide, ces raccords élémentaires étant mis en commun pour former un premier raccord principal 30A du moteur double 30. De même, les premiers raccords élémentaires des moteurs élémentaires 41 et 42 sont mis en commun pour former un premier raccord principal 40A du moteur 40.

Le premier moteur élémentaire 31 comporte un deuxième raccord élémentaire, qui sert à l'échappement ou l'alimentation selon le sens de circulation du fluide et qui forme un deuxième raccord principal 30B pour le moteur 30, tandis que le moteur élémentaire 32 comporte un deuxième raccord élémentaire qui forme le troisième raccord principal 30C du moteur double 30. De même, les moteurs élémentaires 41 et 42 ont des deuxièmes raccords élémentaires qui forment respectivement le deuxième raccord principal 40B et le troisième raccord principal 40C du moteur 40.

De leur côté, les moteurs du premier pont ont chacun un premier et un deuxième raccord principal, respectivement 10A et 10B pour le moteur 10, et 20A et 20B pour le moteur 20.

Les moteurs 10 et 20 peuvent être des moteurs à une cylindrée unique de fonctionnement ou, comme dans l'exemple représenté, des moteurs à plusieurs cylindrées de fonctionnement, par exemple 2. Il peut également s'agir de moteurs du même type que les moteurs 30 et 40.

Les pompes 52 et 62 comportent chacune deux orifices, respectivement 51 et 53 pour la pompe 52, et 61 et 63 pour la pompe 62, ces deux orifices servant respectivement au refoulement de fluide et à l'aspiration de fluide selon le sens de fonctionnement de la pompe. Dans le premier circuit fermé 50, le premier raccord principal 30A du moteur 30 est raccordé en permanence à l'orifice 53 par une conduite de raccordement L30A, tandis que le premier raccord principal du moteur 10 est raccordé en permanence à l'orifice 51 par une conduite L10A. De même, pour le circuit 60, le raccord 40A est raccordé en permanence à l'orifice 63 de la pompe par une conduite L40A et le raccord 20A est relié en permanence à l'orifice 61 de la pompe par une conduite L20A.

Les circuits fermés 50 et 60 comprennent chacun un sélecteur, respectivement 55 et 65.

Selon l'invention, il s'agit de sélecteurs ayant au moins deux positions qui sont disposés sur des conduites de raccordement entre la pompe du circuit fermé, les deuxième et troisième raccords principaux du moteur double et le deuxième raccord principal du moteur du premier pont.

Sur la figure 1, on a représenté les sélecteurs 55 et 65 sous la forme de sélecteurs capables d'occuper quatre positions, respectivement 55A, 55B, 55C, 55D et 65A, 65B, 65C, 65D, et à cinq voies.

La première voie 551 du sélecteur 55 est reliée au raccord principal 10B du moteur 10 par une conduite L10B tandis que sa deuxième voie 552 est reliée au raccord principal 30B par une conduite L30B. La troisième voie 553 est reliée au raccord principal 30C par une conduite L30C. La quatrième voie 554 est reliée à la conduite L10A, c'est-à-dire au raccord principal 10A et à l'orifice 51 de la pompe par une conduite L51, tandis que la cinquième voie 555 est reliée à la conduite L30A, c'est-à-dire au raccord 30A et à l'orifice 53 de la pompe par une conduite L53. De même, les première, deuxième, troisième, quatrième et cinquième voies 651, 652, 653, 654 et 655 sont respectivement reliées au raccord principal 20B par une conduite L20B, au raccord principal 40B par une conduite L40B, au raccord principal 40C par une conduite L40C, à la conduite L20A par une conduite L61, et à la conduite L40A par une conduite L63.

Les sélecteurs 55 et 65 sont identiques et, de manière générale, les circuits fermés 50 et 60 sont identiques.

Le fait que les sélecteurs comportent un grand nombre de positions et de voies permet aux circuits fermés d'adopter un grand nombre de configurations. De manière générale, les sélecteurs comportent au moins deux positions, correspondant par exemple à une situation de circulation sur route de l'engin et à une situation de travail particulièrement exigeante. Ainsi, les sélecteurs peuvent avoir moins de quatre positions, de même qu'ils peuvent comporter moins de cinq voies. Par exemple, comme on le verra dans la suite, les quatrième et cinquième voies 554, 555, 654 et 655 servent respectivement, par les conduites L51, L53, L61, L63, à raccorder l'un et/ou l'autre des moteurs élémentaires du circuit fermé à l'un ou l'autre des orifices de la pompe de ce circuit. En particulier, les quatrièmes voies 554 et 654 peuvent permettre, combinées aux deuxièmes et troisièmes voies 552, 553 et 652, 653, une alimentation en parallèle des deuxièmes moteurs élémentaires des moteurs doubles avec les moteurs du premier pont.

La figure 1 montre les sélecteurs dans leur deuxième position 55B et 65B. C'est une position de partage de débit, puisque, pour chaque circuit fermé, les voies 552 et 554, respectivement 652 et 654 sont reliées entre elles, ce qui revient à raccorder les deuxièmes orifices principaux 30B, 40B des moteurs doubles 30, 40 aux orifices 51, 61 des pompes auxquels sont raccordés les premiers raccords principaux 10A et 20A des moteurs 10 et 20. Ainsi, lorsque les deux sélecteurs 55 et 65 occupent leur position de partage de débit, les premiers moteurs élémentaires 31 et 41 sont alimentés en parallèle avec les moteurs du premier pont si l'on considère que les premiers orifices 51 et 61 des pompes sont des orifices de refoulement.

Par conséquent, la cylindrée totale disponible pour l'entraînement du véhicule est, pour chaque circuit fermé, la somme de la cylindrée active du moteur du premier pont et de la cylindrée du premier moteur élémentaire du moteur double du deuxième pont.

Sur la figure 1, en outre, le troisième raccord principal 30C, 40C du moteur double, 30 et 40 est relié au deuxième raccord principal 10B, 20B du moteur du premier pont 10, 20 (les voies 551 et 553 du sélecteur 55 sont reliées entre elles, de même que les voies 651 et 653 du sélecteur 65). En d'autres termes, pour chaque circuit fermé, le deuxième moteur élémentaire du moteur double est raccordé en série avec le moteur du premier pont. Pour chaque circuit fermé, on obtient ainsi un blocage de différentiel entre les deux roues, respectivement 3 et 1 et 4 et 2, ce qui permet d'éviter le patinage.

Pour mieux comprendre le circuit de la figure 1, le sens de circulation du fluide est indiqué en considérant que l'orifice 51 de la pompe est un orifice de refoulement, les moteurs du premier pont (roues directionnelles) étant alimentés avant les moteurs du deuxième pont en marche avant.

De manière avantageuse, le dispositif comporte des moyens pour respecter une limite inférieure et une limite supérieure de pression dans les conduites L10B et L20B. De manière connue en soi, ces moyens peuvent comporter une soupape de surpression (non représentée) et un clapet de gavage, respectivement C10 et C20, associés à une pompe de gavage, respectivement 52' et 62'. Ainsi, pour chaque circuit fermé, on protège à la fois le moteur du premier pont (10, 20) et le moteur double (30, 40) contre les surpressions et contre les phénomènes de cavitation.

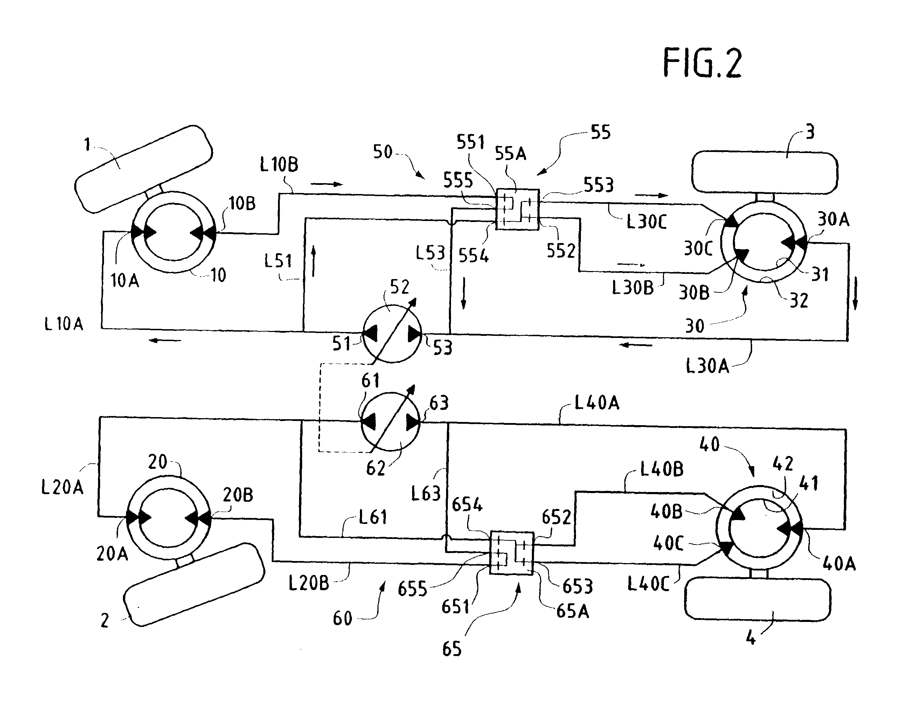

Sur la figure 2, on a représenté la configuration du dispositif de l'invention lorsque les sélecteurs 55 et 65 occupent leurs positions 55A et 65A.

Il s'agit d'une position de couple maximal, dans laquelle les moteurs sont alimentés en parallèle dans chaque circuit fermé. Ainsi, pour le circuit 50, le raccord principal 10A du moteur 10 est relié à l'orifice 51 de la pompe comme il l'est en permanence, tandis que le deuxième raccord principal 10B de ce moteur est raccordé à l'orifice 53 grâce au fait que les conduites L10B et L53 sont reliées entre elles par la liaison des voies 551 et 555 du sélecteur. De leur côté, les deuxième et troisième raccords principaux 30B et 30C du moteur 30 sont reliés à l'orifice 51, les conduites L30B, L30C et L51 étant raccordées par la liaison des voies 552, 553 et 554 du sélecteur. Le raccord principal 30A est quant à lui normalement raccordé à l'orifice 53. De même, pour le circuit 60, des raccords principaux 40B et 40C sont reliés en parallèle à l'orifice 61 de la pompe avec le raccord principal 20A du moteur 20, tandis que le raccord principal 20B du moteur 20 et le raccord principal 40A du moteur 40 sont reliés en parallèle à l'orifice 63. Dans ce cas, la cylindrée totale disponible est, pour chaque circuit fermé, la somme de la cylindrée du moteur du premier pont et des cylindrées des deux moteurs élémentaires du moteur du deuxième pont.

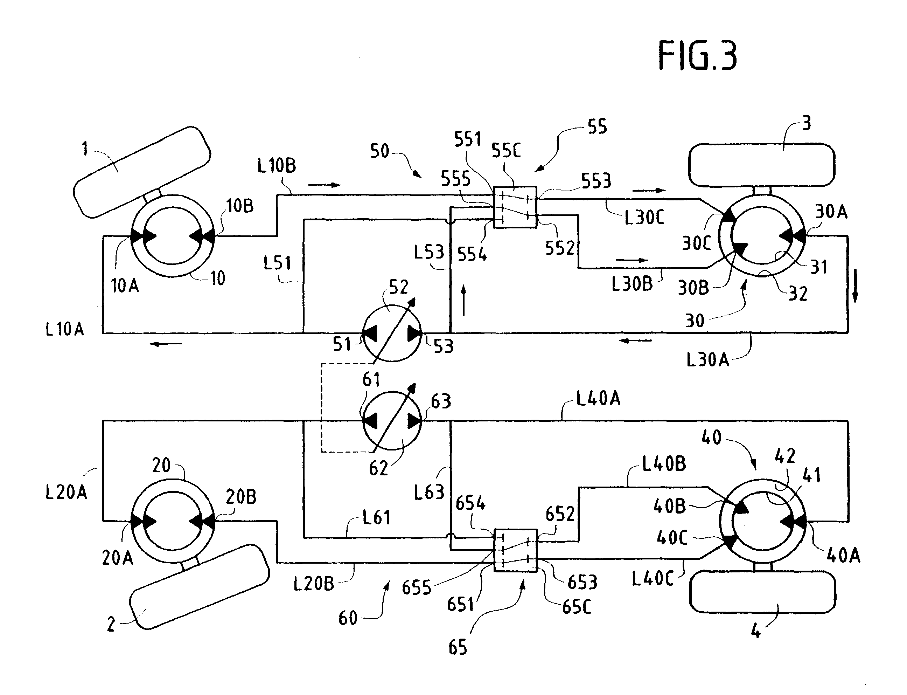

La figure 3 montre les sélecteurs dans leurs positions 55C, 65C de report du débit sur le premier pont. En effet, tout le fluide refoulé ou aspiré par l'orifice 51, 61 de la pompe 52, 62 passe par le premier raccord principal 10A, 20A du moteur 10, 20 du premier pont. Par exemple, pour le circuit 50, le premier raccord 10A du moteur 10 est normalement raccordé à l'orifice 51, tandis que tous les raccords principaux du moteur double 30 sont isolés de ce premier raccord principal. Ainsi, si l'on considère le deuxième moteur élémentaire 32, on constate que son raccord 30C est raccordé en série avec le raccord principal 10B du moteur 10, les conduites L10B et L30C étant reliées par la liaison des voies 551 et 553 du sélecteur. Le raccord 30A étant relié à l'orifice 53 de la pompe, le moteur élémentaire 32 est actif et est disposé en série avec le moteur 10. Dans ce mode de fonctionnement, les cylindrées du moteur 32 et du moteur 10 sont en effet égales. En revanche, le moteur élémentaire 31 est inactif puisque le raccord principal 30B est relié au même orifice 53 que le raccord principal 30A, par la liaison des voies 552 et 555 qui raccorde les conduites L53 et L30B.

On a indiqué précédemment que la cylindrée du moteur 32 est égale à celle du moteur 10 dans cette configuration. Le moteur 10 comprenant deux cylindrées de fonctionnement, on peut concevoir que cette position de sélecteur ne soit possible que lorsque la totalité de la cylindrée du moteur 10 est active, cette cylindrée étant égale à celle du moteur 32.

Dans la position de report du débit sur le deuxième pont, c'est donc la totalité de la cylindrée active des moteurs du premier pont qui détermine le couple développé par les moteurs du dispositif et il y a blocage de différentiel entre les moteurs du même côté du véhicule.

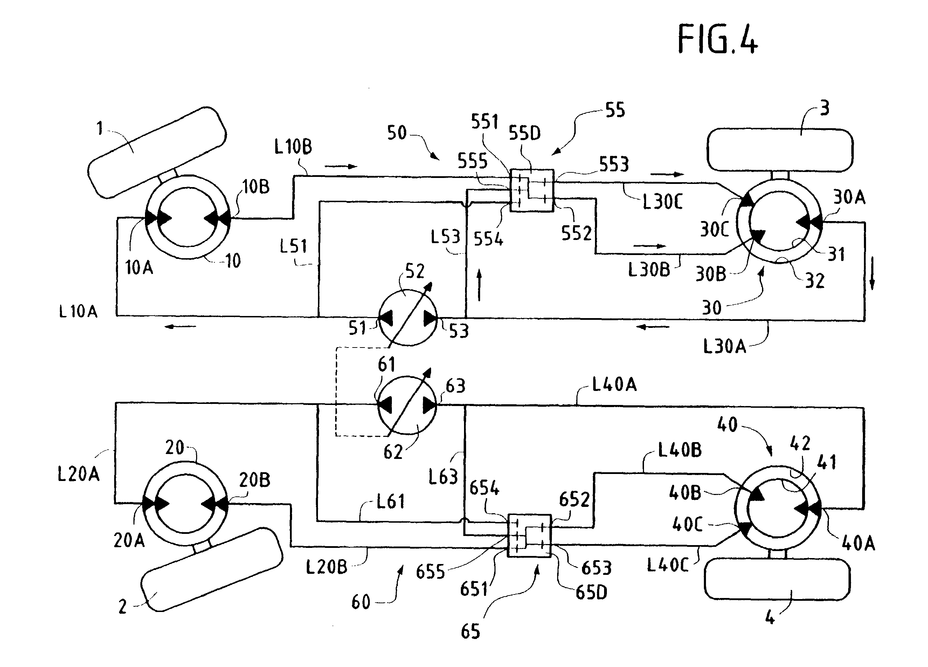

On décrit maintenant la figure 4 qui montre les sélecteurs 55 et 65 dans leurs positions 55D et 65D, c'est-à-dire dans une situation dans laquelle, pour chaque circuit fermé, le débit de fluide est entièrement reporté sur le moteur du premier pont, le moteur du deuxième pont étant totalement inactif. En effet, si l'on considère le circuit 50, on constate que des raccords principaux 30B et 30C du moteur double 30 sont mis en communication par la liaison des voies 553 et 552 du sélecteur, et également en communication avec l'orifice 53 par la liaison desdites voies avec la voie 555. Le premier raccord principal 30A du moteur 30 étant également relié à l'orifice 53, le moteur 30 est totalement inactif. De son côté, le deuxième raccord principal 10B du moteur 10 est également raccordé directement à l'orifice 53 puisque la conduite L10B est reliée à la conduite L53 par la liaison de la voie 551 du sélecteur avec toutes les autres voies de ce sélecteur sauf la voie 554. La situation est la même pour le circuit 60 pour lequel seul le moteur 20 est actif.

Cette configuration est adaptée à une circulation du véhicule dans des conditions dans lesquelles la vitesse doit pouvoir être élevée sans qu'il soit nécessaire d'avoir un couple de traction important, par exemple sur route. Si, pour les moteurs 10 et 20, seule une des deux cylindrées est active, la vitesse est encore augmentée.

Le dispositif représenté sur la figure 1 comporte des moyens pour commander simultanément les sélecteurs *55* et 65. On a ainsi représenté deux lignes de commande, respectivement C55 et C65, reliées à une unité de commande de sélecteur UCS. Bien que les moyens de commande du déplacement des sélecteurs entre l'une ou l'autre de leurs positions ne soient pas représentés en détail, on comprendra qu'ils peuvent être de tout type connu, en particulier électrique, électronique ou encore hydraulique.

Le dispositif comporte également avantageusement des moyens pour, en virage, faire cesser la commande simultanée des sélecteurs 55 et 65 et pour commander ces sélecteurs de telle sorte que la cylindrée totale raccordée à un orifice de la pompe des circuits fermés situés du côté véhicule interne au virage soit supérieure à la cylindrée totale raccordée à l'orifice correspondant de la pompe du circuit fermé situé du côté du véhicule externe au virage. De ce fait, les moteurs entraînant les roues du côté externe au virage pourront, pour un même débit de fluide, entraîner les roues qui leur sont attelées à une vitesse supérieure à celle à laquelle sont entraînées les roues attelées aux moteurs du côté interne au véhicule. Par exemple, si les roues 1 et 3 du circuit 50 se trouvent du côté externe, le sélecteur 55 pourra être commandé de manière à occuper sa position 55D de petite cylindrée, tandis que le sélecteur 65 sera commandé de manière à occuper sa position 65B de telle sorte que, dans le circuit 60, les cylindrées du moteur 20 et du moteur 42 soient actives.

Pour ce faire, on fait en sorte que, en fonction d'un angle de direction du véhicule mesuré par exemple par un capteur 70, l'unité de contrôle des sélecteurs UCS reçoit une information de commander séparément les sélecteurs 55 et 65 vers deux positions distinctes. Par exemple, l'information sur l'angle de direction est transmise, par une ligne de transmission T70, à un microprocesseur 80 qui transmet une information de commande à l'unité de commande des sélecteurs UCS par une ligne de commande CS.

On a indiqué précédemment que les pompes 52 et 62 sont à cylindrées variables. Sur les figures 2 à 4, on a schématisé par des traits interrompus la possibilité de commander simultanément les cylindrées des deux pompes. En fait, le dispositif comprend avantageusement des moyens d'accouplement et de désaccouplement des moyens de commande de la cylindrée des pompes, susceptibles d'être actionnés en fonction des conditions de circulation de l'engin. Sur la figure 1, on a indiqué par la référence CP une unité de commande des cylindrées des pompes. Une ligne CA symbolise la possibilité, pour cette unité de commande, de commander l'accouplement des moyens de commande des cylindrées des deux pompes. Deux lignes C52 et C62 montrent que cette unité peut également commander le désaccouplement des moyens de commande des cylindrées et commander ces moyens de commande des cylindrées séparément. Avantageusement, cette unité CP reçoit son ordre de commande par une ligne CCP raccordée au microprocesseur 80. Par exemple, le conducteur du véhicule peut entrer différents modes de conduites dans un boîtier d'information I, ce qui conditionne les commandes données par le microprocesseur 80.

Avantageusement, dans l'un ou l'autre des modes de conduite, les cylindrées des pompes sont commandées automatiquement. Ainsi, avantageusement, le dispositif comprend une unité de gestion de la commande des cylindrées des pompes 52 et 62 comprenant des moyens pour mesurer, pour chaque circuit fermé, la pression de refoulement de la pompe de ce circuit (moyens schématisés par des capteurs de pression respectivement 54 pour la pompe 52 ct 64 pour la pompe 62) et des moyens pour modifier les cylindrées des pompes afin d'ajuster la pression mesurée sur une pression cible (par exemple par un asservissement).

Avantageusement, cette unité de gestion de la commande des cylindrées des pompes est intégrée dans le microprocesseur 80 qui reçoit les informations des capteurs 54 et 64 par des lignes de transmission d'informations respectivement T54 et T64. La pression cible peut être une pression prédéterminée en fonction du programme de conduite, lorsque l'engin circule dans telle ou telle condition. Selon le type de conduite, on peut chercher à ajuster les pressions de refoulement des deux pompes sur une même valeur, correspondant à la valeur moyenne des pressions de refoulement détectées par les capteurs à un instant donné. On peut également chercher à entretenir une différence d'une valeur prédéterminée entre les pressions de refoulement des deux pompes.

Par exemple, l'unité de gestion de la commande des cylindrées des pompes comprend avantageusement des moyens pour détecter une situation de virage serré et des moyens pour commander les cylindrées des pompes de manière à obtenir, dans le circuit fermé situé du côté extérieur au virage, une pression supérieure à la pression dans le circuit fermé situé du côté intérieur au virage.

La situation de virage serré peut être détectée par le capteur de direction 70 lorsqu'il est présent. Elle peut également être détectée par des capteurs de bout de course du système de direction du véhicule.

Le microprocesseur 80 peut déterminer la pression cible qu'il convient d'affecter aux pressions de refoulement de chacune des deux pompes, par exemple en déterminant un écart entre les deux pressions, et, en fonction de cette pression cible, transmettre un ordre de commande à l'unité de commande de cylindrées des pompes CP. Le microprocesseur peut également déterminer deux pressions cibles, respectivement pour chacun des deux circuits fermés.

Lorsque, comme sur la figure 1, ce sont les moteurs 10 et 30 du circuit 50 qui entraînent les roues extérieures au virage, on choisira une pression de refoulement plus grande pour la pompe 52 que pour la pompe 62. Ceci permettra, si les cylindrées raccordées aux pompes sont égales (ce qui dépend des positions des sélecteurs 55 et 65), de faire en sorte que les moteurs 10 et 30 développent des couples supérieurs à ceux que développent les moteurs 20 et 40, ce qui revient à rechercher volontairement un patinage des roues extérieures au virage pour faciliter le virage.

Sur route, on recherchera plutôt des pressions de refoulement égales dans chacun des deux circuits fermés, et l'unité de gestion de la commande des pompes (par exemple le microprocesseur 80) comprend avantageusement des moyens pour, en situation de circulation sur route, commander les cylindrées des pompes de manière à obtenir des pressions sensiblement égales dans chacun des deux circuits fermés. L'unité de commande CP reçoit alors un ordre de commande adapté de la part du microprocesseur.

Les figures 1 à 4 représentent un engin à deux ponts moteurs. Ceci ne doit toutefois pas être compris de manière limitative et le dispositif de l'invention peut comporter, en outre, un troisième pont moteur ayant deux moteurs hydrauliques, un pour chaque côté de l'engin, les moteurs hydrauliques du troisième pont étant analogues aux moteurs hydrauliques 30 et 40 du deuxième pont. Alors, pour chaque circuit fermé, les premier, deuxième et troisième raccords principaux des moteurs hydrauliques du troisième pont (respectivement analogues aux raccords 30A, 30B, 30C et aux raccords 40A, 40B, 40C) sont respectivement raccordés aux premier, deuxième et troisième raccords principaux (respectivement les raccords 30A, 30B, 30C et les raccords 40A, 40B, 40C) du moteur hydraulique du deuxième pont.

Ainsi, sur un engin à trois ponts moteurs, on peut obtenir les mêmes fonctionnalités que précédemment décrites avec les sélecteurs 55 et 65 disposés de la même manière que sur les figures 1 4.

## Revendications

1. Dispositif de transmission d'un engin mobile comprenant un premier et un deuxième pont moteur, chaque pont moteur ayant deux moteurs hydrauliques (10, 20 ; 30, 40), un pour chaque côté de l'engin, le dispositif comprenant deux circuits fermés de transmission analogues (50, 60), un pour chaque côté de l'engin, chaque circuit fermé ayant une pompe hydraulique (52 ; 62) ainsi qu'un moteur du premier pont (10 ; 20) et un moteur du deuxième pont (30 ; 40),
**caractérisé en ce que** les moteurs hydrauliques (30 ; 40) du deuxième pont sont des moteurs doubles qui comprennent chacun deux moteurs élémentaires (31, 32 ; 41, 42), chaque moteur élémentaire ayant un premier et un deuxième raccord élémentaire, d'alimentation ou d'échappement, les premiers raccords élémentaires étant mis en commun pour former un premier raccord principal (30A ; 40A) du moteur double (30 ; 40), tandis que les deuxièmes raccords élémentaires sont séparés et forment respectivement des deuxième (30B ; 40B) et troisième (30C ; 40C) raccords principaux du moteur double (30 ; 40), les moteurs hydrauliques (10 ; 20) du premier pont ayant chacun au moins un premier et un deuxième raccord principal (10A, 20A ; 10B, 20B), d'alimentation ou d'échappement, **en ce que**, dans chaque circuit fermé (50 ; 60), le premier raccord principal (30A ; 40A) du moteur double (30 ; 40) et le premier raccord principal (10A ; 20A) du moteur du premier pont (10 ; 20) sont respectivement raccordés en permanence à chacun des deux orifices (53, 51; 63, 61) de la pompe (52 ; 62) du circuit considéré et **en ce que** chaque circuit fermé (50 ; 60) comprend, en outre, un sélecteur (55 ; 65) à au moins deux positions (55A, 55B, 55C, 55D ; 65A, 65B, 65C, 65D), disposé sur des conduites de raccordement entre la pompe (52 ; 62), les deuxième et troisième raccords principaux (30B, 30C ; 40B, 40C) du moteur double (30 ; 40) et le deuxième raccord principal (10B ; 20B) du moteur du premier pont (10 ; 20).

2. Dispositif selon la revendication 1, **caractérisé en ce que**, pour chaque circuit fermé, le sélecteur (55 ; 65) présente une position (55D ; 65D) d'inactivation du deuxième pont dans laquelle il met en communication les deuxième et troisième raccords principaux (30B, 30C ; 40B, 40C) du moteur double (30, 40) et les fait communiquer avec l'orifice (53 ; 63) de la pompe (52 ; 62) auquel est raccordé le premier raccord principal (30A , 40A) dudit moteur double.

3. Dispositif selon la revendication 1 ou 2, **caractérisé en ce que**, pour chaque circuit fermé (50 ; 60), le sélecteur (55 ; 65) présente une position de partage de débit (55A, 65A ; 55B, 65B) dans laquelle le deuxième raccord principal (30B, 40B) du moteur double (30, 40) est raccordé à l'orifice (51, 61) de la pompe (52, 62) auquel est relié le premier raccord principal (10A, 20A) du moteur du premier pont (10, 20), en parallèle avec ce dernier.

4. Dispositif selon la revendication 3, **caractérisé en ce que**, pour chaque circuit fermé, le sélecteur présente une position (55B, 65B) de partage de débit et de blocage de différentiel dans laquelle le troisième raccord principal (30C, 40C) du moteur double (30, 40) est raccordé au deuxième raccord principal (10B, 20B) du moteur (10, 20) du premier pont.

5. Dispositif selon la revendication 3 ou 4, **caractérisé en ce que**, pour chaque circuit fermé (50; 60), le sélecteur (55 ; 65) présente une position de partage de débit et de couple maximal (55A ; 65A) dans laquelle les deuxième et troisième raccords principaux (30B, 30C ; 40B, 40C) du moteur double (30 ; 40) et le premier raccord principal (10A ; 20A) du moteur (10 ; 20) du premier pont sont raccordés en parallèle au même orifice (51 ; 61) de la pompe (52 ; 62), tandis que le premier raccord principal (30A ; 40A) du moteur double (30 ; 40) et le deuxième raccord principal (10B, 20B) du moteur (10 ; 20) du premier pont sont raccordés en parallèle à l'autre orifice (53 ; 63) de la pompe (52 ; 62).

6. Dispositif selon l'une quelconque des revendications 1 à 5, **caractérisé en ce que**, pour chaque circuit fermé (50, 60), le sélecteur (55, 65) comporte une position (55C, 65C) de report du débit sur le deuxième pont (10, 20) dans laquelle le premier raccord principal (10A ; 20A) du moteur (10 ; 20) du premier pont est raccordé à un orifice (51 ; 61) de la pompe (52; 62), tandis que le deuxième raccord principal (30B ; 40B) du moteur double (30 ; 40) communique avec l'orifice (53 ; 63) de la pompe (52 ; 62) auquel est raccordé le premier raccord principal (30A; 40B) dudit moteur double, et que le troisième raccord principal (30C ; 40C) du moteur double (30 ; 40) est raccordé au deuxième raccord principal (10B ; 20B) du moteur (10 ; 20) du premier pont.

7. Dispositif selon l'une quelconque des revendications 1 à 6. **caractérisé en ce que**, en marche avant de l'engin, pour chaque circuit fermé (50, 60), le premier raccord principal (10A, 20A) du moteur (10, 20) du premier pont est raccordé à l'orifice de refoulement (51, 61) de la pompe.

8. Dispositif selon l'une quelconque des revendications 1 à 7, **caractérisé en ce que** qu'il comporte des moyens (80, UCS ; C55, C65) pour commander simultanément les sélecteurs (55, 65) des deux circuits fermés.

9. Dispositif selon la revendication 8, **caractérisé en ce qu'**il comporte des moyens (80, 70, UCS, C55, C65) pour, en virage, faire cesser la commande simultanée des sélecteurs (55, 65) des deux circuits fermés et commander lesdits sélecteurs de telle sorte que la cylindrée totale raccordée à un orifice (61) de la pompe (62) du circuit fermé (60) situé du côté de l'engin interne au virage soit supérieure à la cylindrée totale raccordée à l'orifice (51) correspondant de la pompe (52) du circuit fermé (50) situé du côté de l'engin externe au virage.

10. Dispositif selon l'une quelconque des revendications 1 à 9, dans lequel les pompes (52, 62) sont à cylindrées variables, **caractérisé en ce qu'**il comprend des moyens (CA, C52, C62) de commande des cylindrées des pompes (52, 62) et des moyens (CA) d'accouplement et de désaccouplement de ces moyens de commande susceptibles d'être actionnés (80, CP) en fonction des conditions de circulation de l'engin.

11. Dispositif selon la revendication 10, **caractérisé en ce qu'**il comprend une unité (80) de gestion de la commande des cylindrées des pompes comprenant des moyens (54, 64) pour mesurer, pour chaque circuit fermé (50, 60), la pression de refoulement de la pompe (52, 62) de ce circuit et des moyens (CP) pour modifier les cylindrées des pompes pour ajuster la pression mesurée sur une pression cible.

12. Dispositif selon la revendication 11, **caractérisé en ce que** l'unité (80) de gestion de la commande des cylindrées des pompes comprend des moyens (70) pour détecter une situation de virage serré et des moyens (CP) pour commander les cylindrées des pompes (52, 62) de manière à obtenir, dans le circuit fermé (50) situé du côté extérieur au virage, une pression supérieure à la pression dans le circuit fermé (60) situé du côté intérieur au virage.

13. Dispositif selon la revendication 11 ou 12, **caractérisé en ce que** l'unité (80) de gestion de la commande des cylindrées des pompes (52, 62) comprend des moyens (CP) pour, en situation de circulation sur route, commander les cylindrées des pompes (52, 62) de manière à obtenir des pressions sensiblement égales dans chacun des deux circuits fermés (50, 60).

14. Dispositif selon l'une quelconque des revendications 1 à 13, **caractérisé en ce que** le premier pont (10, 20) est directionnel.

15. Dispositif selon l'une quelconque des revendications 1 à 14, pour la transmission d'un engin mobile comportant, en outre, un troisième pont moteur ayant deux moteurs hydrauliques, un pour chaque côté de l'engin, **caractérisé en ce que** les moteurs hydrauliques du troisième pont sont analogues aux moteurs hydrauliques (30 ; 40) du deuxième pont et **en ce que**, pour chaque circuit fermé, les premier, deuxième et troisième raccords principaux des moteurs hydrauliques du troisième pont sont respectivement raccordés aux premier, deuxième et troisième raccords principaux (30A, 30B, 30C ; 40A, 40B, 40C) du moteur hydraulique (30 ; 40) du deuxième pont.

## Patentansprüche

1. Vorrichtung zur Kraftübertragung einer beweglichen Maschine mit einer ersten und einer zweiten Antriebsachse, wobei jede Antriebsachse zwei Hydraulikmotoren (10, 20; 30, 40) umfasst, einen auf jeder Seite der Maschine, wobei die Vorrichtung zwei geschlossene analoge Übertragungskreisläufe (50, 60) umfasst, einen auf jeder Seite der Maschine, wobei jeder geschlossene Kreislauf eine Hydraulikpumpe (52; 62) sowie einen Motor der ersten Achse (10; 20) und einen Motor der zweiten Achse (30; 40) aufweist,
**dadurch gekennzeichnet, dass** die Hydraulikmotoren (30; 40) der zweiten Achse Doppelmotoren sind, die jeweils zwei Grundmotoren (31, 32; 41, 42) aufweisen, wobei jeder Grundmotor einen ersten und einen zweiten Grundanschluss für den Zulauf oder den Ablauf hat, wobei die ersten Grundanschlüsse zum Bilden eines ersten Hauptanschlusses (30A; 40A) des Doppelmotors (30; 40) zusammengeschlossen sind, während die zweiten Grundanschlüsse voneinander getrennt sind und jeweils zweite (30B; 40B) und dritte (30C; 40C) Hauptanschlüsse des Doppelmotors (30; 40) bilden, wobei die Hydraulikmotoren (10; 20) der ersten Achse jeweils wenigstens einen ersten und einen zweiten Hauptanschluss (10A, 20A; 10B, 20B) für den Zulauf oder den Ablauf haben, dass in jedem geschlossenen Kreislauf (50; 60) der erste Hauptanschluss (30A; 40A) des Doppelmotors (30; 40) und der erste Hauptanschluss (10A; 20A) des Motors der ersten Achse (10; 20) jeweils ständig mit jeder der zwei Öffnungen (53, 51; 63, 61) der Pumpe (52; 62) des betreffenden Kreislaufs verbunden sind und dass jeder geschlossene Kreislauf (50; 60) ferner einen Selektor (55; 65) mit wenigstens zwei Positionen (55A, 55B, 55C, 55D; 65A, 65B, 65C, 65D) aufweist, der an den Anschlussleitungen zwischen der Pumpe (52; 62), dem zweiten und dritten Hauptanschluss (30B, 30C; 408, 40C) des Doppelmotors (30; 40) und dem zweiten Hauptanschluss (10B; 20B) des Motors der ersten Achse (10; 20) angeordnet ist.

2. Vorrichtung nach Anspruch 1,
**dadurch gekennzeichnet, dass** der Selektor (55; 65) für jeden geschlossenen Kreislauf eine Position (55D; 65D) zur Inaktivierung der zweiten Achse aufweist, in der er eine Verbindung zwischen dem zweiten und dem dritten Hauptanschluss (30B, 30C; 40B, 40C) des Doppelmotors (30, 40) herstellt und diese mit der Öffnung (53; 63) der Pumpe (52; 62) verbindet, an welche der erste Hauptanschluss (30A, 40A) des Doppelmotors angeschlossen ist.

3. Vorrichtung nach Anspruch 1 oder 2,
**dadurch gekennzeichnet, dass** der Selektor für jeden geschlossenen Kreislauf (50; 60) eine Position zur Teilung der Fördermenge (55A, 65A; 55B, 65B) aufweist, in der der zweite Hauptanschluss (30B, 40B) des Doppelmotors (30, 40) parallel zum ersten Hauptanschluss mit der Öffnung (51, 61) der Pumpe (52, 62) verbunden ist, an welche der erste Hauptanschluss (10A, 20A) des Motors der ersten Achse (10, 20) angeschlossen ist.

4. Vorrichtung nach Anspruch 3,
**dadurch gekennzeichnet, dass** der Selektor für jeden geschlossenen Kreislauf eine Position zur Teilung der Fördermenge und zur Sperrung des Differentials aufweist, in der der dritte Hauptanschluss (30C, 40C) des Doppelmotors (30, 40) mit dem zweiten Hauptanschluss (10B, 20B) des Motors (10, 20) der ersten Achse verbunden ist.

5. Vorrichtung nach Anspruch 3 oder 4,
**dadurch gekennzeichnet, dass** der Selektor (55; 65) für jeden geschlossenen Kreislauf (50; 60) eine Position zur Teilung der Fördermenge und des größten Drehmoments (55A; 65A) aufweist, in der der zweite und der dritte Hauptanschluss ( 30B, 30C; 40B, 40C) des Doppelmotors (30; 40) und der erste Hauptanschluss (10A; 20A) des Motors (10; 20) der ersten Achse parallel zueinander mit derselben Öffnung (51; 61) der Pumpe (52; 62) verbunden sind, während der erste Hauptanschluss (30A; 40A) des Doppelmotors (30; 40) und der zweite Hauptanschluss (103, 20B) des Motors (10; 20) der ersten Achse parallel zueinander an die andere Öffnung der Pumpe (52; 62) angeschlossen sind.

6. Vorrichtung nach einem der Ansprüche 1 bis 5,
**dadurch gekennzeichnet, dass** der Selektor (55, 65) für jeden geschlossenen Kreislauf (50, 60) eine Position (55C, 65C) zur Übertragung der Fördermenge auf die zweite Achse (10, 20) aufweist, in der der erste Hauptanschluss (10A; 20A) des Motors 810; 20) der ersten Achse an eine Öffnung (51; 61) der Pumpe (52; 62) angeschlossen ist, während der zweite Hauptanschluss (30B, 40B) des Doppelmotors (30; 40) mit der Öffnung (53; 63) der Pumpe (52; 62) in Verbindung steht, an welche der erste Hauptanschluss (30A; 40B) des Doppelmotors angeschlossen ist, und dass der dritte Hauptanschluss (30C; 40C) des Doppelmotors (30; 40) an den zweiten Hauptanschluss (108; 20B) des Motors (10; 20) der ersten Achse angeschlossen ist.

7. Vorrichtung nach einem der Ansprüche 1 bis 6,
**dadurch gekennzeichnet, dass** bei Vorwärtsfahrt der erste Hauptanschluss (10A, 20A) des Motors (10, 20) der ersten Achse für jeden geschlossenen Kreislauf an die Förderöffnung (51, 61) der Pumpe angeschlossen ist.

8. Vorrichtung nach einem der Ansprüche 1 bis 7,
**dadurch gekennzeichnet, dass** sie Mittel (80, UCS; C55, C65) zum gleichzeitigen Steuern der Selektoren (55, 65) der zwei geschlossenen Kreisläufe umfasst.

9. Vorrichtung nach Anspruch 8,
**dadurch gekennzeichnet, dass** sie bei Kurvenfahrt Mittel (80, 70, UCS, C55,C65) zum Stoppen der gleichzeitigen Steuerung der Selektoren (55, 65) der zwei geschlossenen Kreisläufe umfasst, so dass das gesamte an eine Öffnung (61) der Pumpe (62) angeschlossene Hubvolumen des an der Kurveninnenseite der Maschine gelegenen geschlossenen Kreislaufs (60) größer ist als das gesamte an die entsprechende Öffnung (51) der Pumpe (52) angeschlossene Hubvolumen des an der Kurvenaußenseite der Maschine gelegenen geschlossenen Kreislaufs (50).

10. Vorrichtung nach einem der Ansprüche 1 bis 9, bei der die Pumpen (52, 62) variable Hubvolumen haben,
**dadurch gekennzeichnet, dass** sie Mittel (CA, C52, C62) zum Steuern der Hubvolumen der Pumpen (52, 62) und Mittel (CA) zum Koppeln und Entkoppeln dieser Steuermittel umfasst, die in Abhängigkeit der Fahrbedingungen der Maschine betätigt (80, CP) zu werden vermögen.

11. Vorrichtung nach Anspruch 10,
**dadurch gekennzeichnet, dass** sie eine Einheit (80) zum Steuern der Steuerung der Hubvolumen der Pumpen umfasst, die für jeden geschlossenen Kreislauf (50, 60) Mittel (54, 64) zum Messen des Förderdrucks der Pumpe (52, 62) dieses Kreislaufs und Mittel (CP) zum Ändern der Hubvolumen der Pumpen aufweist, um den gemessenen Druck an einen Zieldruck anzupassen.

12. Vorrichtung nach Anspruch 11,
**dadurch gekennzeichnet, dass** die Einheit zum Steuern der Steuerung der Pumpenvolumen Mittel (70) zum Erfassen einer engen Kurvensituation und Mittel (CP) zum Steuern der Hubvolumen der Pumpen (52, 62) umfasst, um in dem an der Kurvenaußenseite gelegenen geschlossenen Kreislauf (50) einen Druck zu erzeugen, der höher ist als der Druck in dem an der Kurveninnenseite gelegenen geschlossenen Kreislauf (60).

13. Vorrichtung nach Anspruch 11 oder 12,
**dadurch gekennzeichnet, dass** die Einheit (80) zum Steuern der Steuerung der Hubvolumen der Pumpen (52, 62) Mittel (CP) zum Steuern der Hubvolumen der Pumpen (52, 62) im Fahrbetrieb auf der Straße umfasst, um in jedem der beiden geschlossenen Kreisläufe (50, 60) im Wesentlichen gleiche Drücke zu erzeugen.

14. Vorrichtung nach einem der Ansprüche 1 bis 13,
**dadurch gekennzeichnet, dass** die erste Achse (10, 20) direktional ist.

15. Vorrichtung nach einem der Ansprüche 1 bis 14 zur Kraftübertragung einer beweglichen Maschine, die ferner eine dritte Antriebsachse umfasst, die zwei Hydraulikmotoren aufweist, einen auf jeder Seite der Maschine,
**dadurch gekennzeichnet, dass** die Hydraulikmotoren der dritten Achse analog zu den Hydraulikmotoren (30; 40) der zweiten Achse sind, und dass für jeden geschlossenen Kreislauf der erste, zweite und dritte Haupanschluss der Hydraulikmotoren der dritten Achse jeweils an den ersten, zweiten und dritten Haupanschluss (30A, 30B, 30C; 40A, 40B, 40C) des Hydraulikmotors (30; 40) der zweiten Achse angeschlossen sind.

## Claims

1. Vehicle transmission apparatus comprising first and second drivable axles, each drivable axle having two hydraulic motors (10, 20; 30, 40), one on each side of the vehicle, the apparatus comprising two analogous closed transmission circuits (50, 60), one for each side of the vehicle, each closed circuit having a hydraulic pump (52; 62) as well as a motor of the first axle (10; 20) and a motor of the second axle (30; 40);
said apparatus being **characterised in that** the hydraulic motors (30; 40) of the second axle are dual-capacity motors, each of which comprises two elementary motors (31; 32; 41, 42), each elementary motor having first and second elementary connections, for feed or discharge purposes, the first elementary connections being in common to form a first main connection (30A; 40A) of the dual-capacity motor (30; 40), while the second elementary connections are separate and form respectively a second main connection (30B; 40B) and a third main connection (30C; 40C) of the dual-capacity motor (30; 40), each of the hydraulic motors (10; 20) of the first axle having at least first and second main connections (10A, 20A; 10B, 20B), for feed or discharge purposes, **in that**, in each closed circuit (50; 60), the first main connection (30A; 40A) of the dual-capacity motor (30; 40) and the first main connection (10A; 20A) of the motor of the first axle (10; 20) are connected continuously to respective ones of the two ports (53, 51; 63, 61) of the pump (52; 62) of the circuit in question, and **in that** each closed circuit (50; 60) further includes a selector (55; 65) having at least two positions (55A, 55B, 55C, 55D; 65A, 65B, 65C, 65D), disposed on interconnection ducts between the pump (52; 62), the second and third main connections (30B, 30C; 40B, 40C) of the dual-capacity motor (30; 40) and the second main connection (10B; 20B) of the motor of the first axle (10; 20).

2. Apparatus according to claim 1, **characterised in that**, for each closed circuit, the selector (55; 65) has a position (55D; 65D) for deactivating the second axle, in which position it puts in communication the second and third main connections (30B, 30C; 40B, 40C) of the dual-capacity motor (30; 40) and causes them to communicate with that port (53; 63) of the pump (52; 62) to which the first main connection (30A; 40A) of said dual-capacity motor is connected.

3. Apparatus according to claim 1 or 2, **characterised in that**, for each closed circuit (50; 60), the selector (55; 65) has a flow-rate sharing position (55A, 65A; 55B, 65B) in which the second main connection (30B, 40B) of the dual-capacity motor (30, 40) is connected to that port (51, 61) of the pump (52, 62) which is connected to the first main connection (10A, 20A) of the motor of the first axle (10, 20), in parallel therewith.

4. Apparatus according to claim 3, **characterised in that**, for each closed circuit, the selector has a flow-rate sharing and differential lock position (55B, 65B) in which the third main connection (30C, 40C) of the dual-capacity motor (30, 40) is connected to the second main connection (10B, 20B) of the motor (10, 20) of the first axle.

5. Apparatus according to claim 3 or 4, **characterised in that**, for each closed circuit (50; 60), the selector (55; 65) has a flow-rate sharing and maximum torque position (55A; 65A) in which the second and third main connections (30B; 30C; 40B, 40C) of the dual-capacity motor (30; 40) and the first main connection (10A; 20A) of the motor (10; 20) of the first axle are connected in parallel to the same port (51; 61) of the pump (52; 62) while the first main connection (30A; 40A) of the dual-capacity motor (30; 40) and the second main connection (10B, 20B) of the motor (10; 20) of the first axle are connected in parallel to the other port (53; 63) of the pump (52; 62).

6. Apparatus according to any one of claims 1 to 5, **characterised in that**, for each closed circuit (50, 60), the selector (55, 65) has a flow-rate transfer position (55C, 65C) for transferring the flow rate to the second axle (10, 20), in which position the first main connection (10A; 20A) of the motor (10; 20) of the first axle is connected to a port (51; 61) of the pump (52; 62), while the second main connection (30B; 40B) of the dual-capacity motor (30, 40) communicates with that port (53; 63) of the pump (52; 62) which is connected to the first main connection (30A; 40B) of said dual-capacity motor, and while the third main connection (30C; 40C) of the dual-capacity motor (30; 40) is connected to the second main connection (10B; 20B) of the motor (10; 20) of the first axle.

7. Apparatus according to any one of claims 1 to 6, **characterised in that**, when the vehicle is in forward drive, for each closed circuit (50, 60), the first main connection (10A, 20A) of the motor (10, 20) of the first axle is connected to the delivery port (51, 61) of the pump.

8. Apparatus according to any one of claims 1 to 7, **characterised in that** it includes means (80, UCS; C55, C65) for controlling the selectors (55, 65) of both of closed circuits simultaneously.

9. Apparatus according to claim 8, **characterised in that** it includes means (80, 70, UCS, C55, C65) that, during turning, cause the simultaneous control of the selectors (55, 65) of the two closed circuits to cease, and control said selectors such that the total cylinder capacity connected to a port (61) of the pump (62) of the closed circuit (60) situated on the side of the vehicle that is on the inside of the turn is greater than the total cylinder capacity that is connected to the corresponding port (51) of the pump (52) of the closed circuit (50) situated on the side of the vehicle that is on the outside of the turn.

10. Apparatus according to any one of claims 1 to 9, in which the pumps (52, 62) are of variable cylinder capacity, said apparatus being **characterised in that** it includes control means (CA, C52, C62) for controlling the cylinder capacities of the pumps (52, 62) and coupling and decoupling means (CA) for coupling and decoupling these control means, the coupling and decoupling means being suitable for being actuated (80, CP) as a function of the conditions under which the vehicle is traveling.

11. Apparatus according to claim 10, **characterised in that** it includes a unit (80) for managing control of the cylinder capacities of the pumps, which unit includes means (54, 64) for measuring, for each closed circuit (50, 60), the delivery pressure of the pump (52, 62) of the circuit, and means (CP) for modifying the cylinder capacities of the pumps so as to adjust the measured pressure to match it to a target pressure.

12. Apparatus according to claim 11, **characterised in that** the unit (80) for managing control of the cylinder capacities of the pumps comprises means (70) for detecting a tight turn situation and means (CP) for controlling the cylinder capacities of the pumps (52, 62) in a manner such as to obtain, in the closed circuit (50) situated on the outside of the turn, a pressure greater than the pressure in the closed circuit (60) situated on the inside of the turn.

13. Apparatus according to claim 11 or 12, **characterised in that** the unit (80) for managing control of the cylinder capacities of the pumps (52, 62) includes means (CP) which, in an on-road travel situation, control the cylinder capacities of the pumps (52, 62) in a manner such as to obtain pressures that are substantially equal in both of the closed circuits (50, 60).

14. Apparatus according to any one of claims 1 to 13, **characterised in that** the first axle (10, 20) is steerable.

15. Apparatus according to any one of claims 1 to 14, for a vehicle transmission further including a third drivable axle having two hydraulic motors, one for each side of the vehicle, said apparatus being **characterised in that** the hydraulic motors of the third axle are analogous to the hydraulic motors (30; 40) of the second axle, and **in that**, for each closed circuit, the first, second, and third main connections of the hydraulic motors of the third axle are respectively connected to the first, second, and third main connections (30A, 30B, 30C; 40A, 40B, 40C) of the hydraulic motor (30; 40) of the second axle.
